Europäisches Patentamt

**European Patent Office**

**Office européen des brevets**

(19)

(11) Numéro de publication: **0 040 575**

**A1**

(12)

# DEMANDE DE BREVET EUROPEEN

(21) Numéro de dépôt: **81400786.0**

(22) Date de dépôt: **19.05.81**

(51) Int. Cl.³: **G 02 F 1/01**
**G 02 F 1/03**

(30) Priorité: **20.05.80 FR 8011248**

(43) Date de publication de la demande:
**25.11.81 Bulletin 81/47**

(84) Etats contractants désignés:
**DE GB IT**

(71) Demandeur: **COMMISSARIAT A L'ENERGIE ATOMIQUE Etablissement de Caractère Scientifique Technique et Industriel**
**B.P. 510**
**F-75752 Paris Cedex 15(FR)**

(72) Inventeur: **Bodin, Bernard**
**31, Le Placage**
**F-38360 Sassenage(FR)**

(72) Inventeur: **Robert, Jacques**
**Domaine de la Ronce Les Etangs A 5**
**F-92410 Ville d'Avray(FR)**

(74) Mandataire: **Mongredien, André et al,**
**c/o Brevatome 25, rue de Ponthieu**
**F-75008 Paris(FR)**

(54) **Procédé de fabrication de portes optiques et de leur circuit de commande.**

(57) Ce procédé consiste à fixer par des moyens transparents, sur une plaque-support transparente (7), au moins un barreau allongé (8) de matériau électro-optique, à réaliser des portes optiques à partir de ce barreau, par découpage de rainures transversales (9) dans ce barreau, jusqu'à la plaque-support (7), de manière à former des éléments de barreau, et par élaboration d'électrodes d'excitation (11,12) sur chaque élément du barreau, à réaliser sur la plaque-support (7) le circuit de commande et d'interconnexion des électrodes d'excitation, puis à connecter ces électrodes au circuit de commande (3, 4).

Application à la fabrication d'ensembles linéaires de portes optiques.

FIG. 1

La présente invention concerne un procédé de fabrication de portes optiques et de leur circuit de commande. Elle s'applique à la fabrication de portes optiques réalisées sous forme de barrettes constituées dans un matériau électro-optique tel qu'une céramique PLZT ; ces portes optiques sont destinées à modifier les caractéristiques de la lumière qui les traverse, notamment pour faire varier la polarisation et l'amplitude de la vibration lumineuse qui les traverse perpendiculairement à leurs faces parallèles. Les barrettes de portes optiques sont disposées entre deux polariseurs croisés, de façon qu'en l'absence d'excitation par un champ électrique, la lumière transmise soit d'amplitude nulle. Lorsqu'un champ électrique est appliqué à l'une des portes de la barrette, une partie de la lumière est transmise à l'endroit correspondant à cette porte.

Il est connu de réaliser des portes optiques à partir d'un barreau d'un matériau électro-optique tel qu'une céramique PLZT qui présente deux faces parallèles sur lesquelles les électrodes sont déposées. Des portes optiques connues, de ce type, sont décrites notamment dans la demande de brevet français n° 77 28175 déposée le 19 septembre 1977 au nom du même demandeur. Généralement et tel que décrit dans la demande de brevet précitée, les électrodes de commande des portes optiques sont reliées à un circuit de commande qui permet de leur appliquer des champs électriques séquentiels. Les électrodes des portes d'une barrette sont également reliées entre elles de manière à exciter chaque porte par coïncidence entre impulsions envoyées sur les deux électrodes définissant la porte. Ces électrodes et les conducteurs d'interconnexion sont constitués, de manière connue, par un dépôt cathodique sous vide, d'un matériau conducteur tel que l'oxyde d'indium In $_2O_3$ qui a pour avantage de présenter une très bonne adhérence, notamment avec les céramiques PLZT. Cependant, un dépôt conducteur de ce type est peu ductile et se casse sous l'effet d'électrostriction. Afin d'éviter cet inconvénient, il serait

B 6909.3 DC

nécessaire de déposer sur les électrodes, une couche épaisse d'or par exemple, mais ceci ajoute un inconvénient supplémentaire puisque ce dépôt protecteur accroît le prix de revient des portes optiques ainsi constituées. De plus, ce type de portes a pour inconvénient supplémentaire, de nécessiter une surface importante de matériau électro-optique, du fait de la disposition des interconnexions de part et d'autre des portes, sur le matériau électro-optique lui-même.

La présente invention a pour but de remédier à des inconvénients et notamment de permettre la fabrication de portes optiques et leur circuit de commande, grâce à des opérations simples qui permettent de constituer les portes optiques et leurs électrodes de commande, à la suite du découpage transversal d'un barreau d'un matériau électro-optique fixé sur une plaque-support transparente ; cette plaque supporte également le circuit de commande des portes ainsi réalisées, ce qui rend peu fragile la liaison entre les portes et leur circuit de commande.

L'invention vise essentiellement un procédé de fabrication de portes optiques et de leur circuit de commande, caractérisé en ce qu'il consiste :
- à fixer par des moyens transparents, sur une plaque-support transparente, au moins un barreau allongé de matériau électro-optique,
- à réaliser des portes optiques à partir de ce barreau, par découpage de rainures transversales dans ce barreau, jusqu'à la plaque-support, de manière à former des éléments de barreau, et par élaboration d'électrodes d'excitation sur chaque élément du barreau,
- à réaliser sur ladite plaque-support le circuit de commande et d'interconnexion des électrodes d'excitation,
- à connecter ces électrodes audit circuit de commande et d'interconnexion.

Selon un premier mode de réalisation de l'invention, les électrodes sont élaborées dans chacune des rainures tranversales.

B 6909.3 DC

Selon une autre caractéristique de l'invention, les électrodes sont constituées par une colle ou une résine conductrice coulée dans les rainures et reliées au circuit de commande par des fils conducteurs.

Selon une autre caractéristique, les électrodes sont élaborées par dépôt d'une couche mince d'un matériau conducteur recouvrant les parois et le fond de chaque rainure, les dépôts réalisés dans les différentes rainures étant reliés individuellement au circuit de commande.

De préférence, le dépôt conducteur étant un métal, chaque rainure est ensuite comblée par croissance électrolytique.

Selon un deuxième mode de réalisation de l'invention, les électrodes sont élaborées par dépôt d'un matériau conducteur sur deux faces opposées du barreau qui ne sont pas en contact avec la plaque-support, avant découpage des rainures transversales, de sorte que de ce découpage subsistent des électrodes élémentaires sur les faces opposées des éléments du barreau découpé, les rainures étant transversales par rapport à ces électrodes, ces électrodes étant ensuite reliées au circuit de commande.

Selon une autre caractéristique de ce mode de réalisation, les électrodes sont constituées par une couche de résine époxy conductrice ou par un dépôt métallique.

Selon une autre caractéristique commune aux deux modes de réalisation, le circuit de commande est constitué sous forme d'un circuit double couche à deux réseaux de conducteurs de commande.

Selon une autre caractéristique, le circuit double couches est réalisé par un dépôt sous vide d'une couche de métal dans laquelle est constitué le premier réseau, cette couche étant revêtue d'une couche isolante, elle-même recouverte par dépôt sous vide d'une autre couche de métal dans laquelle est constitué le deuxième réseau.

Selon une autre caractéristique, le circuit double couches est réalisé par sérigraphie.

B 6909.3 DC

Selon une autre caractéristique, la plaque-support transparente est une plaque de verre, tandis que les moyens de fixation du barreau sur cette plaque sont constitués par une colle optique transparente.

Selon une autre caractéristique, le matériau électro-optique est une céralique PLZT.

D'autres caractéristiques et avantages de l'invention ressortiront mieux de la description qui va suivre, donnée en référence aux figures annexées dans lesquelles :

- la figure 1 représente un premier type de portes optiques obtenues selon le procédé de l'invention,

- la figure 2 représente un deuxième type de portes optiques obtenues selon le procédé de l'invention ;

- la figure 3 représente respectivement en a et en b un premier et un second modes de réalisation des électrodes pour le premier type de portes optiques obtenues selon le procédé de l'invention ;

- la figure 4 représente schématiquement le circuit de commande multicouches des portes optiques du premier type, représentées sur les figures 1 et 3 et qui sont obtenues par le procédé de l'invention ;

- la figure 5 représente un circuit de commande de portes optiques du deuxième type représentées sur la figure 2 et qui sont obtenues selon le procédé de l'invention.

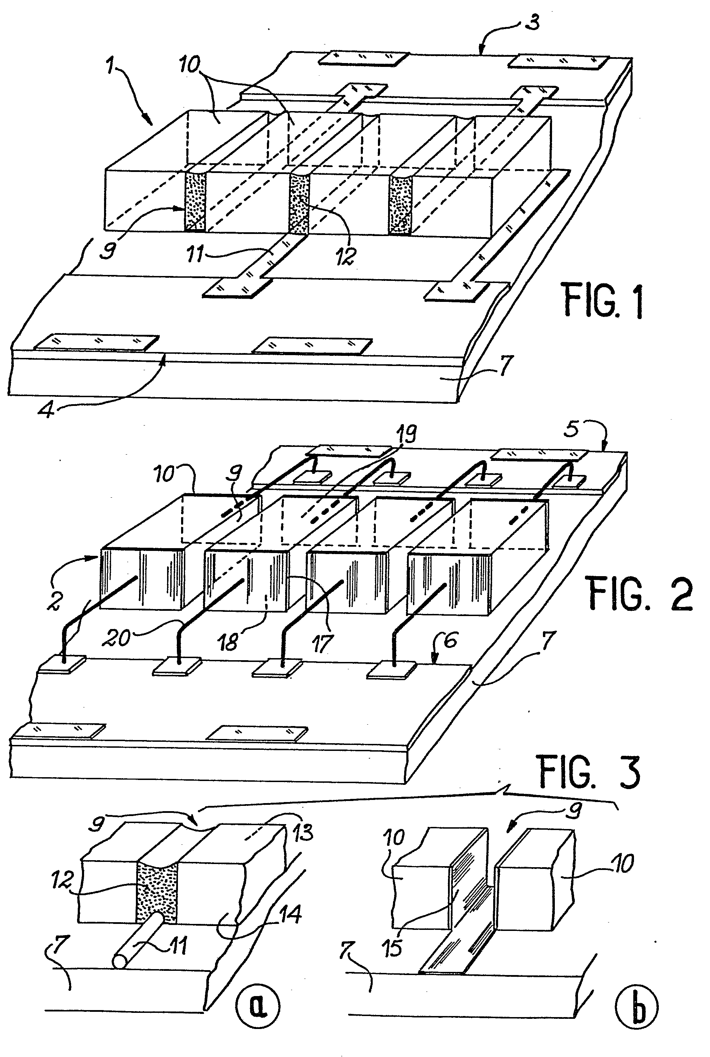

Les figures 1 et 2 représentent respectivement des portes optiques 1,2 d'un premier et d'un deuxième types, obtenues selon le procédé de l'invention. Ces portes sont commandées par un circuit de commande représenté schématiquement en 3 et 4 sur la figure 1 et en 5, 6 sur la figure 2. Ce circuit de commande sera décrit plus loin en détail. Le procédé consiste à fixer, par des moyens transparents sur une plaque-support transparente 7 portant le circuit de commande, au moins un barreau allongé 8, de matérieu électro-optique. La plaque transparente est de préférence en verre, tandis que les moyens transparents de fixation du barreau sur cette plaque sont constitués par une colle optique transparente, le matériau électro-optique constituant le barreau 8, étant une céramique PLZT. On réalise ensuite les portes optiques, à partir de ce barreau, par découpage de rainures transversales 9 dans ce barreau, jusqu'à la plaque-support 7 de manière à former des éléments de barreau 10. L'élaboration des électrodes d'excitation sur chaque élément de barreau découpé, sera décrite plus loin en détail. Ces électrodes d'excitation sont reliées aux circuits de commande (3, 4) (Fig. 1) et 5,6) (Fig.2), réalisés sur la plaque-support 7, sous forme de circuits multicouches qui seront décrits plus loin.

Dans le premier type de portes optiques représentées sur la figure 1, les électrodes sont élaborées dans chacune des rainures transversales 9 qui sont réalisées par sciage du barreau 8. Ces électrodes élaborées dans chacune des rainures transversales, pour ce premier type de portes optiques, peuvent être réalisées de deux façons.

La figure 3 représente en a et b deux modes de réalisation de ces électrodes, pour le premier type de portes optiques de la figure 1. Dans le premier mode de réalisation représenté schématiquement en a, chaque électrode est constituée par une colle conductrice 12 coulée dans la rainure considérée reliée au circuit de commande par un fil conducteur 11 métallique, en cuivre ou en or par exemple, noyé dans cette colle. La mise en place de cette électrode s'effectue de la manière suivante : on positionne le fil conducteur 11, à l'intérieur de la rainure 19, ce fil conducteur assurera la liaison entre l'électrode qui va être formée et le circuit de commande. La colle ou la résine epoxy conductrice est déposée à la "raclette" dans la rainure, selon une technique couramment utilisée en sérigraphie. Cette colle ou cette résine remplit la rainure et toute trace de colle est ensuite éliminée sur les faces extérieures 13, 14 de la barrette, par nettoyage à l'aide d'un solvant ou par polissage. Il est évidemment possible, avant de découper le barreau de matériau électro-optique, de protéger la surface externe du barreau par un vernis tel qu'une résine photosensible par exemple ; on découpe ensuite le barreau et on remplit les rainures de colle conductrice et il suffit alors d'éliminer le vernis protecteur par dissolution dans un solvant ou par brûlage. La colle ou la résine époxy conductrice peut aussi être déposée par sérigraphie, à travers un masque protégeant les surfaces latérales actives du barreau.

Les électrodes, pour ce premier type de portes optiques réalisées selon le procédé de l'invention, peuvent aussi être élaborées de la façon représentée en b sur la figure 3. Dans ce second mode de réalisation, les électrodes sont élaborées par dépôt d'une couche mince 15 d'un matériau conducteur, qui recouvre les parois de chaque rainure 9 et se prolonge sur le support 7. Les dépôts réalisés dans les différentes rainures sont reliés individuellement au circuit de commande (non représenté sur cette figure). Ce dépôt est constitué de cuivre par exemple, déposé au fond et sur les parois de chaque rainure, cette rainure peut ensuite être comblée par le même métal, par croissance électrolytique par exemple.

Dans le deuxième type de portes optiques, obtenues selon le procédé de l'invention et qui sont représentées sur la figure 2, les électrodes sont élaborées de la manière suivante : avant découpage du barreau pour former des rainures dans celui-ci, un dépôt d'une couche d'un matériau conducteur est effectué sur chacune des faces 16, 17 du barreau. Ce matériau conducteur peut être soit une résine époxy conductrice, soit un dépôt métallique d'aluminium, d'or, etc... . Le barreau est alors découpé, ce qui permet d'obtenir sur ses deux faces opposées des électrodes telles que 18, 19. Dans ce type de portes optiques, il y a deux électrodes par porte ; ces

0040575

électrodes peuvent être réunies directement au circuit de commande, si elles sont constituées par de la résine époxy déposée par sérigraphie, sans étape technologique supplémentaire, tandis qu'elles sont réunies à ce circuit de commande par des fils de connexion 20, lorsqu'elles sont constituées dans un matériau métallique.

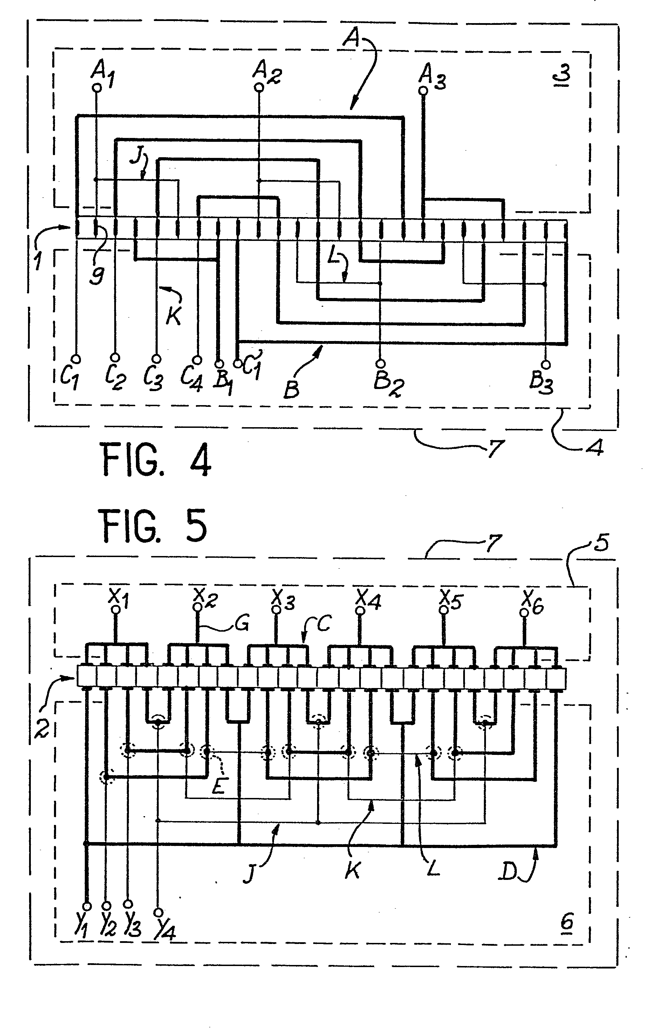

Les figures 4 et 5 représentent schématiquement et respectivement, les portes optiques 1, 2 des premier et deuxième types, associées respectivement aux circuits de commande (3,4) et (5,6). Ces portes sont représentées en vue de dessus sur ces figures. Comme indiqué plus haut, les circuits de commande de ces portes sont réalisés sous forme de circuits double couches, à deux réseaux de conducteurs de commande. Ces circuits peuvent être élaborés, soit par dépôt sous vide, soit par sérigraphie ; dans le cas de la sérigraphie, les différents dépôts sont effectués à partir de pâte déposée à travers l'émail d'un écran, puis recuite. La définition obtenue est de l'ordre de 100 µ. Par dépôt sous vide, les opérations sont les suivantes : on dépose sur la plaque de verre une couche d'un métal tel que l'aluminium, le chrome ou l'or, et on grave le premier réseau de conducteurs de commande ; ce premier réseau est par exemple le réseau de conducteurs représenté en traits forts, en A et B sur la figure 4, et en C et D sur la figure 5. On dépose ensuite une couche isolante telle que l'oxyde de silicium $SiO_2$ par exemple et on grave cette couche isolante pour dégager des plots de connexion et de sortie tels que E. Ces plots permettent de relier certains des conducteurs de ce premier réseau à des conducteurs du deuxième réseau. La couche isolante est alors recouverte d'un dépôt métallique conducteur dans lequel est gravé le deuxième réseau. Ce deuxième réseau est représenté en J, K, L sur les figures, en traits fins. Il est à remarquer que chaque étape de dépôt ou de gravure peut se limiter à une seule opération, par dépôt à travers un masque.

B 6909.3 DC

Dans le cas des portes optiques du premier type, représentées sur la figure 4, certains conducteurs tels que L et H, du deuxième réseau, pourraient être situés de l'autre côté de la barrette, dans la partie 4 du circuit de commande.

De manière connue, deux signaux séquentiels de commande sont appliqués aux bornes $A_1$, $A_2$, $A_3$, $B_1$, $B_2$, $B_3$, $C_1$, $C_2$, $C_3$, $C_4$, $C'_1$, de manière que le champ électrique induit par ces signaux, dans chacun des éléments du barreau, commande l'ouverture de différentes portes ainsi constituées, la radiation lumineuse ayant une direction perpendiculaire au plan de la figure.

De manière également connue, et notamment grâce aux circuits de commande décrits dans la demande de brevet citée plus haut, les portes optiques représentées sur la figure 5, sont commandées par des signaux séquentiels. Ces signaux appliquent des potentiels de commande sur les électrodes 18, de sorte que les champs électriques qui commandent l'ouverture ou la fermeture des différentes portes soient des champs dont la direction est parallèle à la plaque-support 7 et perpendiculairement à la direction longitudinale du barreau. Ces signaux séquentiels de commande sont appliqués sur les bornes $X_1$, $X_2$, $X_3$, $X_4$, $X_5$, $X_6$, $Y_1$, $Y_2$, $Y_3$, $Y_4$, du circuit de commande (5,6).

Les portes optiques et leur circuit de commande, qui viennent d'être décrits sont placés entre deux polariseurs et peuvent être éclairés par une source ponctuelle associée par un miroir concave cylindrique ou à une lentille cylindrique, de manière à obtenir sur la barrette de portes optiques, un éclairage concentré et linéaire. Elles peuvent être également éclairées par une source filiforme telle qu'un tube fluorescent de faible diamètre associé à une lentille cylindrique, avec ou sans miroir cylindrique de concentration de la lumière.

Le procédé qui vient d'être décrit présente de nombreux avantages par rapport au procédé qui permet d'obtenir des portes optiques sans découpage du barreau de

B 6909.3 DC

matériau électro-optique, mais par réalisation directe des circuits d'interconnexion sur ce barreau non découpé. En effet, la quantité de matériau électro-optique utilisé, grâce au procédé de l'invention, est beaucoup plus faible ; les opérations de fabrication sont beaucoup plus simples et beaucoup plus sûres, puisque dans les procédés connus, les électrodes constituées d'oxyde d'indium déposé directement sur le barreau, se coupent par effet d'électro-striction. De plus, les portes obtenues grâce au procédé de l'invention, sont beaucoup plus efficaces car les champs électriques à l'intérieur du barreau sont mieux répartis, uniformes, et permettent d'utiliser tout le volume actif du barreau découpé, ce qui conduit à une réduction des tensions de commande des électrodes. Enfin, grâce à ce procédé, il est possible d'assembler plusieurs barreaux les uns à côté des autres pour atteindre les longueurs souhaitées. C'est ainsi qu'il est possible d'obtenir des barreaux de portes optiques de 15 à 30 cm de longueur. Enfin, du fait de la réalisation du circuit de commande, directement sur la plaque-support des portes optiques, le nombre de sorties du dispositif est beaucoup plus réduit, ce qui entraîne une simplification du circuit de commande des portes optiques ainsi réalisées.

B 6909.3 DC

0040575

## REVENDICATIONS

1. Procédé de fabrication de portes optiques et de leur circuit de commande, caractérisé en ce qu'il consiste :

- à fixer par des moyens transparents, sur une plaque-support transparente (7), au moins un barreau allongé (8) de matériau électro-optique,

- à réaliser des portes optiques à partir de ce barreau, par découpage de rainures transversales (9) dans ce barreau, jusqu'à la plaque-support (7), de manière à former des éléments de barreau, et par élaboration d'électrodes d'excitation (11, 12, 18, 19) sur chaque élément du barreau,

- à réaliser sur ladite plaque-support (7) le circuit de commande et d'interconnexion des électrodes d'excitation,

- à connecter ces électrodes audit circuit de commande et d'interconnexion 3, 4, 5, 6.

2. Procédé selon la revendication 1, caractérisé en ce que les électrodes (11, 12) sont élaborées dans chacune des rainures transversales.

3. Procédé selon la revendication 2, caractérisé en ce que les électrodes sont constituées par une colle ou une résine époxy (12), coulée dans les rainures (9).

4. Procédé selon la revendication 2, caractérisé en ce que les électrodes sont élaborées par dépôt d'une couche mince (15) d'un matériau conducteur recouvrant les parois et le fond de chaque rainure (9), les dépôts réalisés dans les différentes rainures étant reliés individuellement au circuit de commande (3, 4).

5. Procédé selon la revendication 4, caractérisé en ce que le dépôt conducteur (15) étant un métal, chaque rainure (9) est ensuite comblée par croissance électrolytique.

6. Procédé selon la revendication 1, caractérisé en ce que les électrodes (18,19) sont élaborées par

B 6909.3 DC

dépôt d'un matériau conducteur sur deux faces opposées (16, 17) du barreau qui ne sont pas en contact avec la plaque-support (7), avant découpage des rainures transversales (9), de sorte que de ce découpage subsistent des électrodes élémentaires (18,19) sur les faces opposées des éléments du barreau découpé, les rainures (9) étant transversales par rapport à ces électrodes, ces électrodes étant ensuite reliées au circuit de commande (5,6).

7. Procédé selon la revendication 6, caractérisé en ce que les électrodes (18,19) sont constituées par une couche de résine époxy conductrice ou par un dépôt métallique.

8. Procédé selon l'une quelconque des revendications 1 à 7, caractérisé en ce que le circuit de commande (3, 4, 5,6) est réalisé sous forme d'un circuit double couches à deux réseaux (A, B, C, D, J, K, L) de conducteurs de commande.

9. Procédé selon la revendication 8, caractérisé en ce que le circuit double couches (3,4,5,6) est réalisé par un dépôt sous vide d'une couche de métal dans laquelle est constitué le premier réseau, cette couche étant revêtue d'une couche isolante, elle-même recouverte par dépôt sous vide d'une autre couche de métal dans laquelle est constitué le deuxième réseau.

10. Procédé selon la revendication 8, caractérisé en ce que le circuit double couches est réalisé par sérigraphie.

11. Procédé selon la revendication 8, caractérisé en ce que la plaque-support transparente (7) est une plaque de verre, tandis que les moyens de fixation du barreau sur cette plaque sont constitués par une colle optique transparente.

12. Procédé selon l'une au moins des revendications 1 à 11, caractérisé en ce que le matériau électro-optique (8) est une céramique PLZT.

13. Application du procédé conforme à l'une quelconque des revendications 1 à 12, à la fabrication

B 6909.3 DC

d'un ensemble lineaire de portes optiques comportant sur une lame-support transparente, un circuit de commande et d'interconnexion, une série d'éléments électro-optiques munis chacun de deux électrodes de commande et des moyens de connexion entre ce circuit de commande et d'interconnexion et ces électrodes de commande.

B 6909.3 DC

FIG. 1

FIG. 2

FIG. 3

(a)

(b)

FIG. 4

FIG. 5

Office européen **RAPPORT DE RECHERCHE EUROPEENNE** EP 81 40 0786
des brevets

| Catégorie | Citation du document avec indication, en cas de besoin, des parties pertinentes | Revendica-tion concernée | CLASSEMENT DE LA DEMANDE (Int. Cl.³) |
|---|---|---|---|
| | **DOCUMENTS CONSIDERES COMME PERTINENTS** | | |
| | <u>US - A - 3 862 795</u> (J. TELLERMAN)<br><br>  * Figures 5-10, 12-14; colonne 4, ligne 64 - colonne 5, ligne 3; colonne 5, lignes 29-61; revendications 1,2,5,7* | 1,2,4,<br>7,9,11,<br>13 | G 02 F 1/01<br>1/03 |
| A | APPLIED OPTICS, vol. 13, no. 4, avril 1974<br>New York, US<br>YASUTSUGU TAKEDA: "Digital Spatial Modulators", pages 825-831<br><br>  * Page 825, colonne de droite, lignes 4-16; page 827, co-lonne de gauche, du dernier alinéa - colonne de droite, ligne 21 * | 1,2,6,<br>9,12 | DOMAINES TECHNIQUES RECHERCHES (Int. Cl.³)<br><br>G 02 F 1/01<br>1/05<br>1/03 |
| A | <u>US - A - 3 709 586</u> (JAMES LIPP)<br><br>  * Figure 1, colonne 2, lignes 51-61; colonne 3, ligne 65-colonne 4, ligne 58 * | 1,3,5,<br>7,10,<br>11 | |
| A | <u>FR - A - 2 403 577</u> (COMMISSARIAT<br><u>A L'ENERGIE ATOMIQUE</u>, FRANCE)<br><br>  * Revendications 1-3; figures 1,2,4 * | 1,4,8,<br>12 | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cite dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 16-07-1981 | FARNESE |

OEB Form 1503.1  06.78